# EUROPÄISCHE PATENTSCHRIFT

(11) **EP 3 565 970 B1**
(45) Veröffentlichungstag und Bekanntmachung des Hinweises auf die Patenterteilung: **28.09.2022**
(21) Anmeldenummer: 18700089.8
(22) Anmeldetag: 03.01.2018
(51) Int. Cl.: F03D 80/60

(54) **WINDENERGIEANLAGE UND VERWENDUNG EINES TROPFENABSCHEIDERS IN EINEM WINDENERGIEANLAGENROTOR**
WIND TURBINE AND USE OF A MIST ELIMINATOR IN A WIND TURBINE ROTOR
ÉOLIENNE ET UTILISATION D'UN SÉPARATEUR DE GOUTTES DANS UN ROTOR D'ÉOLIENNE

(30) Priorität: 05.01.2017 DE 102017100134
(43) Veröffentlichungstag der Anmeldung: 13.11.2019
(73) Patentinhaber: Wobben Properties GmbH, 26607 Aurich (DE)
(72) Erfinder: SCHRIEVER-SCHUBRING, Julius, 85276 Pfaffenhofen (DE)
(74) Vertreter: Eisenführ Speiser
(86) Internationale Anmeldenummer: PCT/EP2018/050092
(87) Internationale Veröffentlichungsnummer: WO 2018/127500

(56) Entgegenhaltungen:
- CN-A- 105 736 258
- DE-A1-102007 045 044
- US-A1- 2011 175 368

## Beschreibung

Die vorliegende Erfindung betrifft eine Windenergieanlage sowie eine Verwendung eines Tropfenabscheiders in einem Windenergieanlagenrotor.

Eine Windenergieanlage weist typischerweise eine Gondel mit einem aerodynamischen Rotor auf, welcher typischerweise drei Rotorblätter aufweist. Ein elektrischer Generator ist mit dem aerodynamischen Rotor direkt oder indirekt gekoppelt und erzeugt elektrische Energie, wenn der aerodynamische Rotor sich dreht. Beim Betrieb erzeugt der elektrische Generator Verlustwärme, so dass der Generator gekühlt werden muss. In der Gondel können ferner weitere elektrische Komponenten, wie beispielsweise ein Gleichrichter vorgesehen werden, welcher ebenfalls Verlustwärme erzeugt und daher gekühlt werden sollte.

Eine Kühlung innerhalb der Gondel kann beispielsweise durch ein geschlossenes Kühlsystem oder durch ein Kühlsystem realisiert werden, welches Außenluft durch eine Öffnung in den stehenden Teil der Gondel ansaugt. Diese angesaugte Luft kann dann zum Kühlen des elektrischen Generators sowie der weiteren elektrischen Komponenten verwendet werden und danach wieder nach außen gepustet werden. Hierbei kann die angesaugte Außenluft auch feuchte Luft, bis hin zu Wassertropfen aus Nebel oder Regen aufweisen.

In der prioritätsbegründenden deutschen Patentanmeldung hat das Deutsche Patent- und Markenamt folgende Dokumente recherchiert: DE 10 2007 045 044 A1 und DE 10 2012 212 619 A1.

Dokument US 2011/175368 A1 zeigt eine Windenergieanlage mit einem drehenden Rotorkopf sowie Rotorblätter.

Es ist eine Aufgabe der vorliegenden Erfindung, eine Windenergieanlage mit einer effektiveren Kühlung vorzusehen, insbesondere ein Kühlsystem einer Windenergieanlage mit wassertropfenfreier Außenluft vorzusehen und das entzogene Wasser definiert abzuführen.

Diese Aufgabe wird durch eine Windenergieanlage nach Anspruch 1 sowie durch eine Verwendung eines Tropfenabscheiders in einem Windenergieanlagenrotor nach Anspruch 6 gelöst.

Gemäß der Erfindung wird eine Windenergieanlage mit einer Gondel und einem aerodynamischen (drehbaren) Rotor vorgesehen, welcher einen Rotorkopf bzw. einen Spinner aufweist. Der Rotorkopf oder Spinner ist dabei in Anströmrichtung des Windes vor einer Rotorblattebene angeordnet. In oder an dem Rotorkopf bzw. dem Spinner des Rotors ist ein Tropfenabscheider vorgesehen, welcher sich mit dem Rotorkopf bzw. Spinner dreht. Der Tropfenabscheider weist ein Ende auf, das als Öffnung in dem Rotorkopf bzw. dem Spinner ausgestaltet ist. Durch dieses Ende kann Luft eindringen und durch den Tropfenabscheider fließen, so dass am Ausgang des Tropfenabscheiders im Wesentlichen wassertropfenfreie Luft vorhanden ist, welche zur Kühlung des Generators verwendet werden kann. Der Tropfenabscheider befindet sich in dem drehenden Teil der Gondel, nämlich im Rotor. Damit dreht sich der Tropfenabscheider zusammen mit dem Rotor.

Beispielsweise können die mit diesem Tropfenabscheider minimal abscheidbaren Tropfen 15 µm im Durchmesser betragen. Kleinere können nur mit höherem Aufwand und höheren Druckverlusten abgeschieden werden.

Gemäß einem Aspekt der vorliegenden Erfindung ist der Tropfenabscheider als mindestens eine Lamelle ausgestaltet, welche spiralförmig angeordnet ist. Die Spirale kann kegelförmig ausgestaltet sein. Ein Ende der Spirale (d.h. die Spitze) stellt eine Öffnung in dem Rotorkopf dar, so dass feuchte Außenluft zu der Spitze der Spirale gelangt und die feuchte Luft durch den spiralförmigen Tropfenabscheider fließt, so dass die Luft von der sich darin befindlichen Feuchtigkeit getrennt wird.

Die Ausgestaltung des Tropfenabscheiders als spiralförmige Lamelle, wobei eine Grundlinie der Spirale einen Kegel darstellt, ist insbesondere vorteilhaft, weil damit die abgeschiedene Flüssigkeit durch die eigene Rotation des Tropfenabscheiders zur Mitte der Spirale gefördert wird und dann ablaufen kann.

Gemäß einem Aspekt der vorliegenden Erfindung ist die Kegelform der Spirale lediglich sehr flach ausgeprägt, um zu vermeiden, dass der Spalt zwischen zwei Lamellenschichten auf der Wind zugewandten Seite zu klein (bis hin zum Kontakt) wird und auf der inneren, Wind abgewandten Seite zu groß wird.

Gemäß einem Aspekt der vorliegenden Erfindung ist die Steigung der Spirale im innersten Bereich des Tropfenabscheiders steiler, um abgeschiedene Flüssigkeit innerhalb eines kleinen Radius an die Spitze des Tropfenabscheiders zu transportieren. Im inneren Bereich findet keine Tropfenabscheidung mehr statt, da hier keine starke Umlenkung der anströmenden Luft mehr hervorgerufen wird. Das abgeschiedene Wasser läuft in der Rinne des Tropfenabscheiders durch die starke Umlenkung, die in den Lamellen entsteht, nach vorne zum ersten Ende des Tropfenabscheiders und kann nach außen abfließen. Daher kann optional im hinteren inneren Teil des Tropfenabscheiders eine Barriere, beispielsweise in Form einer Wand vorgesehen sein.

Mit der erfindungsgemäßen Windenergieanlage ist es möglich, wassertropfenfreie Luft für eine Luftkühlung der Windenergieanlage vorzusehen, welche durch einen rotierenden Tropfenabscheider in dem Rotorkopf bzw. dem Spinner erzeugt wird.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem ersten Ausführungsbeispiel,
- Fig. 2A und 2B: zeigen schematische Darstellungen eines Tropfenabscheiders gemäß einem ersten Ausführungsbeispiel,
- Fig. 3: zeigt eine perspektivische Schnittansicht eines Tropfenabscheiders gemäß einem zweiten Ausführungsbeispiel,
- Fig. 4: zeigt eine perspektivische Schnittansicht eines Tropfenabscheiders gemäß einem dritten Ausführungsbeispiel,
- Fig. 5: zeigt eine Draufsicht des Tropfenabscheiders gemäß Fig. 4,
- Fig. 6A bis 6C: zeigen jeweils eine schematische Darstellung eines Tropfenabscheiders gemäß einem vierten Ausführungsbeispiel,
- Fig. 6D und 6E: zeigen jeweils eine schematische Darstellung eines Wasserlaufes bei dem Tropfenabscheider gemäß dem vierten Ausführungsbeispiel,
- Fig. 7A bis 7C: zeigen jeweils eine schematische Darstellung eines Tropfenabscheiders gemäß einem fünften Ausführungsbeispiels,
- Fig. 7D: zeigt eine schematische Darstellung eines Wasserlaufes bei dem Tropfenabscheider gemäß dem fünften Ausführungsbeispiel und.
- Fig. 8: zeigt eine schematische Darstellung eines Wasserlaufes bei einem Tropfenabscheider gemäß einem sechsten Ausführungsbeispiel.

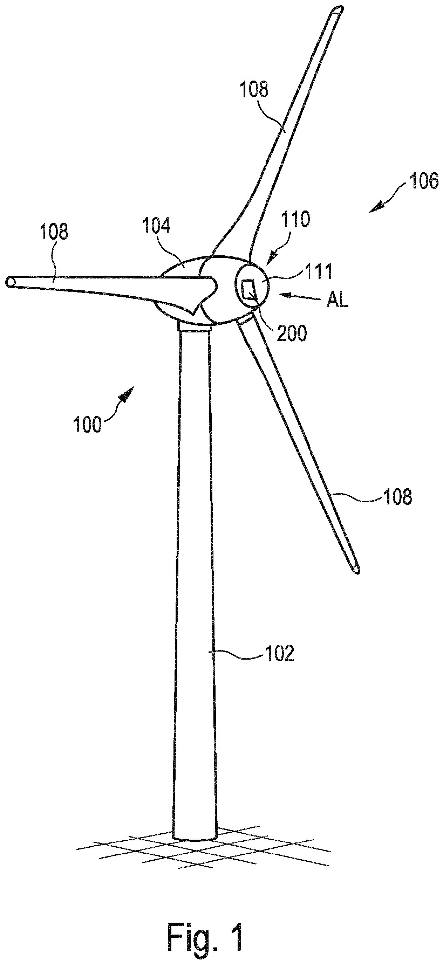

Fig. 1 zeigt eine schematische Darstellung einer Windenergieanlage gemäß einem ersten Ausführungsbeispiel. Die Windenergieanlage 100 weist einen Turm 102 und eine Gondel 104 auf. An der Gondel 104 ist ein Rotor 106 mit drei Rotorblättern 108 und einem Spinner oder Rotorkopf 110 vorgesehen. Der Rotor 106 wird im Betrieb durch den Wind in eine Drehbewegung versetzt und treibt einen Generator in der Gondel an, um elektrische Energie zu erzeugen. Die Windenergieanlage weist ferner im Bereich des Rotorkopfes bzw. des Spinners 110 einen Tropfenabscheider 200 auf. Der Tropfenabscheider 200 ist mit dem Rotorkopf bzw. dem Spinner 110 gekoppelt, so dass sich der Tropfenabscheider 200 zusammen mit dem Rotorkopf 110 dreht. In dem Rotorkopf bzw. dem Spinner 110 ist ein Ende des Tropfenabscheiders 200 ist als eine Öffnung 111 vorgesehen, durch welche Außenluft AL in das Innere des Rotorkopfes 110 und damit in den Rest des Tropfenabscheiders 200 eindringen kann. Durch den Tropfenabscheider 200 wird der Außenluft AL die enthaltenen Wassertropfen entzogen, so dass am Ausgang des Tropfenabscheiders im Wesentlichen wassertropfenfreie Luft L vorhanden ist.

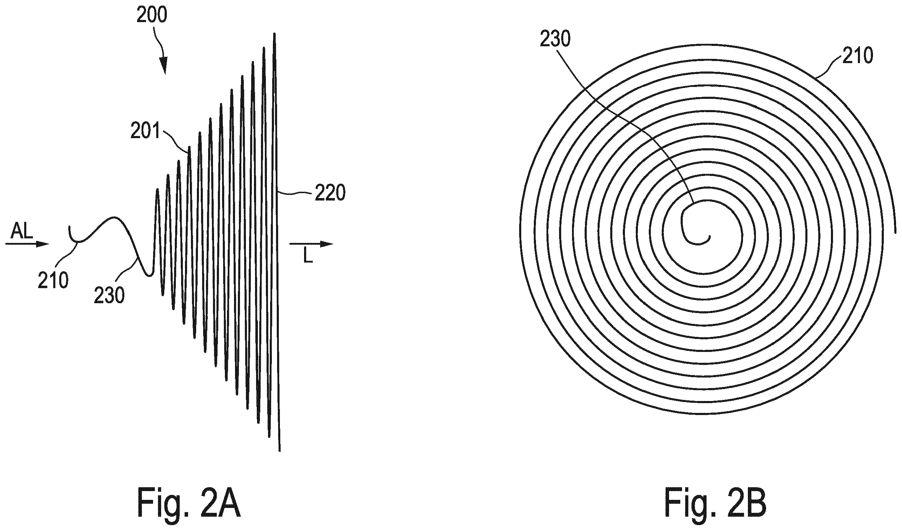

Fig. 2A und 2B zeigen schematische Darstellungen eines Tropfenabscheiders gemäß einem ersten Ausführungsbeispiel. Der Tropfenabscheider 200 weist gemäß dem ersten Ausführungsbeispiel mindestens eine Lamelle 201 auf, welche spiralförmig angeordnet ist. Die Spirale 200 bildet einen Kegel, so dass eine Spitze 210 der Spirale 200 vorgelagert ist. Damit stellt die Spitze 210 ein erstes Ende der Spirale dar. Das zweite Ende 220 der Spirale ist an der gegenüberliegenden Seite der Spirale 200 vorgesehen. An dem ersten Ende 210 dringt feuchte und wassertropfenbehaftete Außenluft AL in den spiralförmigen Tropfenabscheider und am zweiten Ende 220 wird im Wesentlichen wassertropfenfreie Luft L abgegeben.

Durch die Ausgestaltung des spiralförmigen Tropfenabscheiders, der spiralförmig angeordneten Lamelle, welche eine kegelförmige Grundlinie der Spirale aufweist, besteht darin, dass die abgeschiedene Flüssigkeit durch die Rotation des Tropfenabscheiders zur Mitte der Spirale hin gefördert wird und dort ablaufen kann.

Gemäß der Erfindung ist die Kegelform nur sehr schwach ausgestaltet, um zu vermeiden, dass der Spalt zwischen den Lamellenschichten auf der Wind zugewandten Seite zu klein (bis hin zum Kontakt) wird und auf der inneren, Wind abgewandten Seite zu groß wird. Im inneren Bereich 230 des Tropfenabscheiders 200 ist eine Steigung der Spirale steiler als im äußeren Bereich. Dies ist vorteilhaft, damit die abgeschiedene Flüssigkeit bzw. Fluid innerhalb eines kleines Radius an die Spitze 210 transportiert werden kann, damit die abgeschiedene Flüssigkeit nach außen abgegeben werden kann. Aufgrund der Ausgestaltung des inneren Bereichs 230 trägt dieser nicht mehr nur bedingt zur Tropfenabscheidung bei, insbesondere weil in diesem inneren Bereich keine starke Umlenkung erfolgt. Das Wasser, welches hier eindringt, wird durch das nachkommende abgeschiedene durch die Drehung hier herausgeführte verdrängt und nach außen geschoben.

Optional kann im Bereich des inneren Bereichs des zweiten Endes 220 eine Wand bzw. Barriere vorgesehen sein. Im inneren Bereich von 220 sollte die Wand eingezogen werden, weil sonst wassertropfenhaltige Luft in den Rotorkopf strömt. Im Äußeren Bereich von 220 darf keine eingezogen werden, weil sonst die Luft nicht mehr abfließen kann.

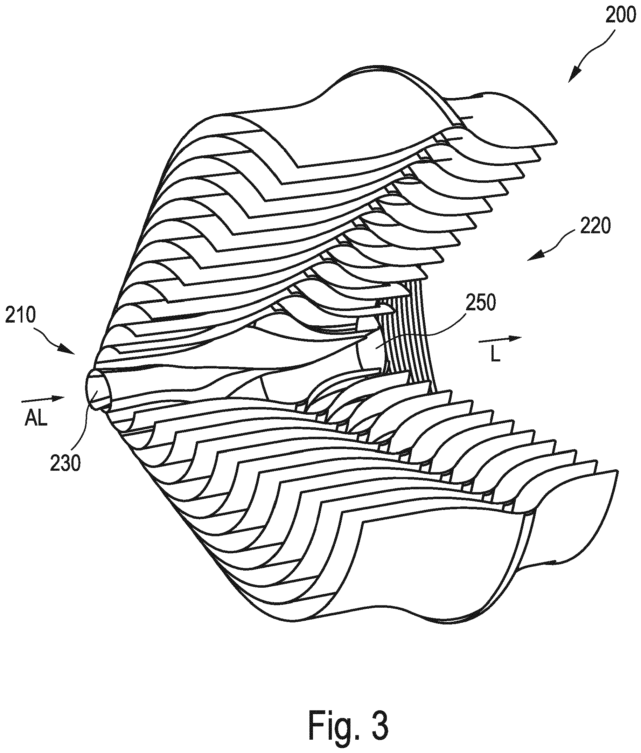

Fig. 3 zeigt eine perspektivische Schnittansicht eines Tropfenabscheiders gemäß einem zweiten Ausführungsbeispiel. In Fig. 3 ist insbesondere ein Schnitt der dreidimensionalen Ausgestaltung des Tropfenabscheiders gemäß dem zweiten Ausführungsbeispiel gezeigt. Der Tropfenabscheider 200 weist ein erstes Ende 210 und ein zweites Ende 220 auf. Der Tropfenabscheider ist insbesondere in Form einer spiralförmig ausgestalteten Lamelle angeordnet, welche eine kegelförmige Grundlinie aufweist. In einem inneren Bereich 230 und am zweiten Ende 220 kann optional eine Wand 250 als Barriere für wassertropfenbehaftete Luft vorgesehen sein, um zu verhindern, dass die wassertropfenbehaftete Luft in den Rotorkopf eindringt.

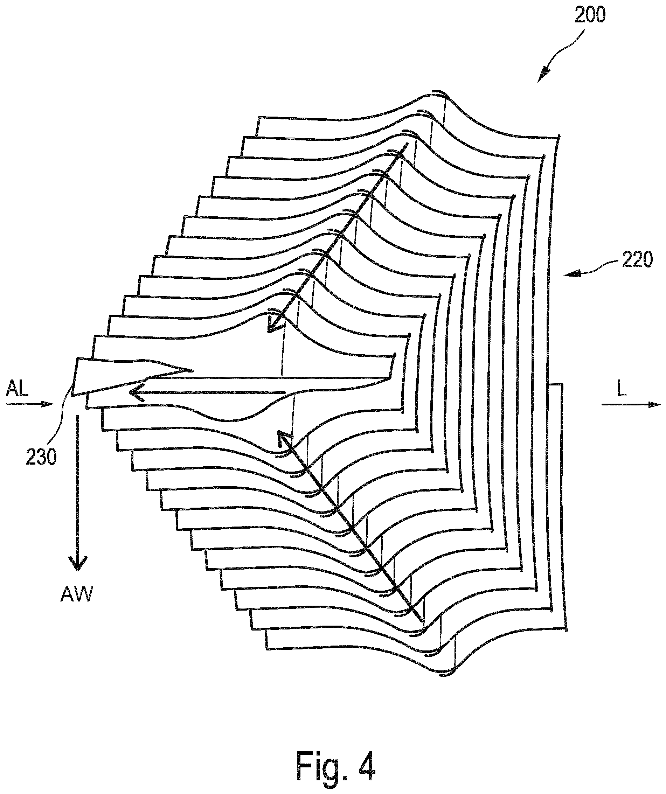

Der durch den Tropfenabscheider 200 entstehende Druckverlust wird durch die Form der Lamellen und die Hälfte der Spalte zwischen den jeweiligen Schichten der Spirale hervorgerufen. Um abscheidbare Wassertröpfchen von ca. 10 µm bis 5 mm zu erreichen, ist zwischen den Lamellenschichten ein Abstand von ca. 10 mm bis 100 mm vorgesehen. Fig. 4 zeigt eine perspektivische Schnittansicht eines Tropfenabscheiders gemäß einem dritten Ausführungsbeispiel. Der Tropfenabscheider gemäß dem dritten Ausführungsbeispiel weist eine spiralförmig angeordnete Lamelle auf, welche eine kegelförmige Grundlinie aufweist. Der Tropfenabscheider 200 weist ein erstes Ende 210 und ein zweites Ende 220 sowie einen inneren Bereich 230 auf. Wassertropfenbehaftete Außenluft AL wird in das erste Ende eingeführt und wassertropfenfreie Luft L wird am zweiten Ende 220 ausgegeben. Das abgeschiedene Wasser AW verläuft durch die Rotationsbewegung des Tropfenabscheiders in den inneren Bereich 230 und dann zum ersten Ende 210 hin, wo es nach außen abfließen kann.

Der erfindungsgemäße Tropfenabscheider arbeitet nach dem Prinzip der Strömungsumlenkung durch geformte Kanäle aus Lamellen. Gemäß der Erfindung wird abgeschiedenes Wasser durch die Rotation nach vorne an das erste Ende 210 des Abscheiders transportiert, wo es dann nach außen abfließen kann.

Gemäß einem Aspekt der vorliegenden Erfindung kann ein Überlauf nach vorne ausgelegt sein, so dass Wasser nicht bei Stillstand der Anlage in die Anlage gelangen kann. Insbesondere kann das Niveau jeder Lamellenschicht ist im vorderen Bereich zur Drehachse radial näher als im hinteren Bereich des Tropenabscheiders sein.

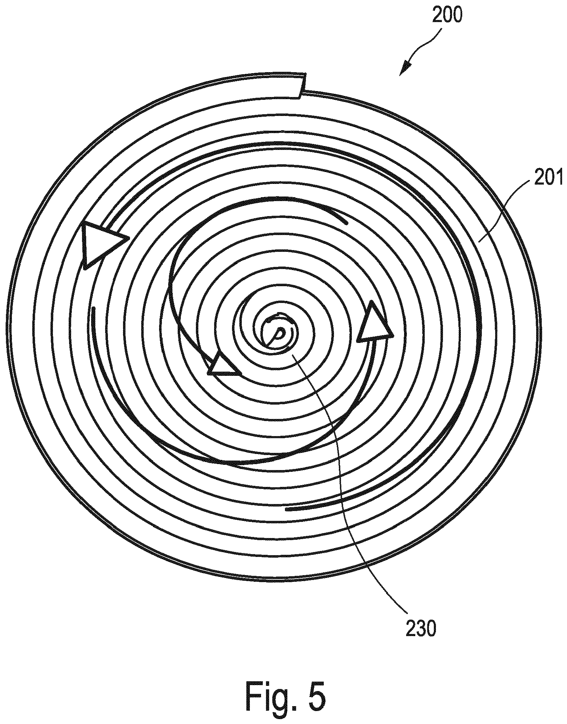

Fig. 5 zeigt eine Draufsicht des Tropfenabscheiders gemäß Fig. 4. Die Pfeile in Fig. 5 zeigen hierbei wie das abgeschiedene Wasser zum ersten Ende 210 hin befördert wird.

Bei der erfindungsgemäßen Windenergieanlage kann der Staudruck aus der Anströmung des Windes zur, zumindest teilweisen, Überwindung der Druckverluste des Tropfenabscheiders ausgenutzt werden.

Der erfindungsgemäße Tropfenabscheider weist Lamellen auf, die starke Richtungsänderungen im Strömungskanal des Abscheiders erzeugen und somit eine Trennung von gasförmiger und flüssiger Phase bewirken können.

Gemäß der Erfindung können Feuchtigkeitstropfen z.B. bei einem Lamellenabstand von 20 mm bis zu einer Größe von 15 µm abgeschieden werden.

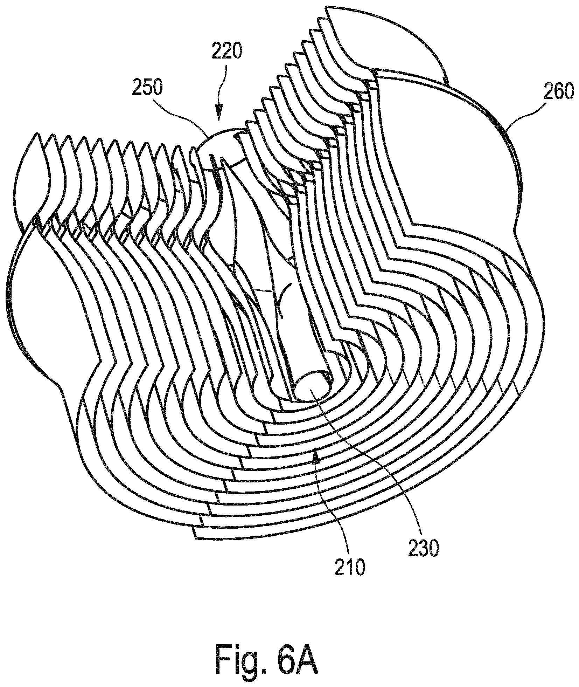

Fig. 6A bis 6C zeigen jeweils eine schematische Darstellung eines Tropfenabscheiders gemäß einem vierten Ausführungsbeispiel. Der Tropfenabscheider gemäß dem vierten Ausführungsbeispiel entspricht im Wesentlichen dem Tropfenabscheider gemäß dem dritten Ausführungsbeispiel, wobei die Spirale jedoch nicht kegelförmig ausgestaltet ist. Bei dem Tropfenabscheider gemäß dem vierten Ausführungsbeispiel läuft das Wasser nach vorne, d.h. zum ersten Ende 210 des Tropfenabscheiders ab. Gemäß der Erfindung kann eine Rinne 260 vorgesehen sein, über welche bzw. mittels welcher das Wasser abfließen kann. Die Grundform des Tropfenabscheiders ist nicht kegelförmig ausgestaltet. Das erste und zweite Ende kann hierbei gerade ausgestaltet sein.

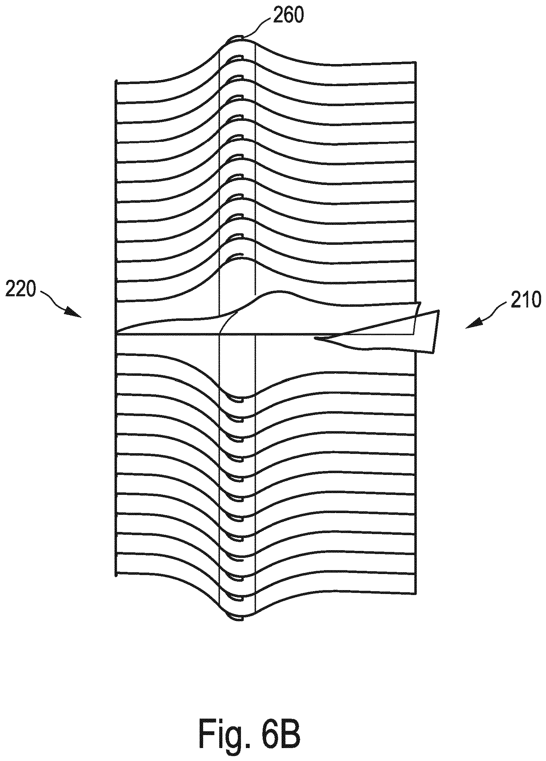

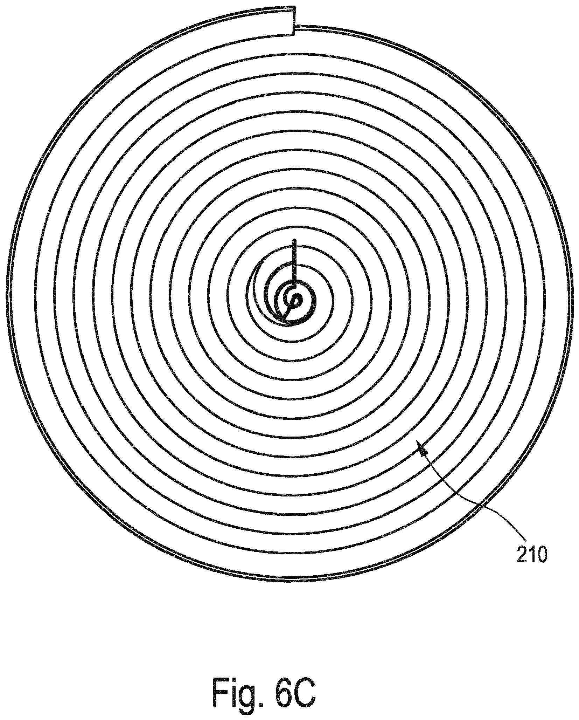

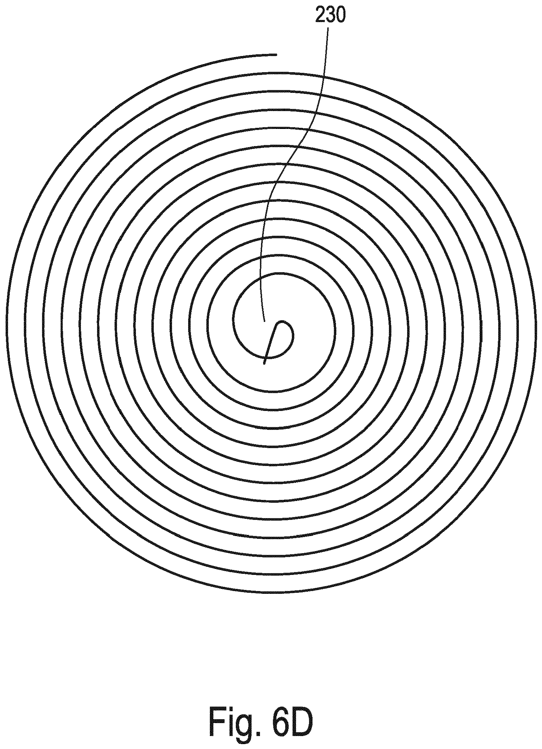

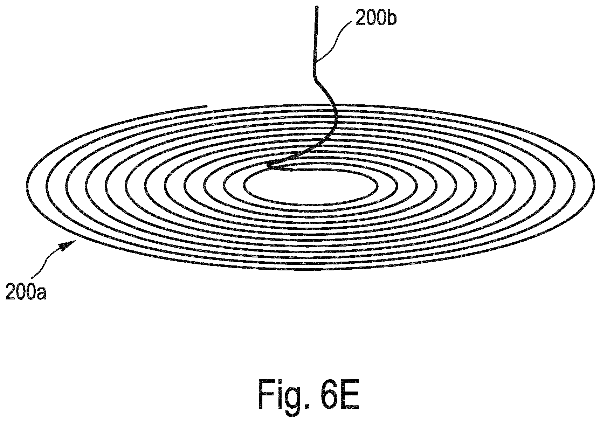

In Fig. 6 ist die Vorderansicht des Tropfenabscheiders gemäß dem vierten Ausführungsbeispiels gezeigt. Hierbei ist insbesondere die spiralform des Tropfenabscheiders zu sehen.

Fig. 6D und 6E zeigen jeweils eine schematische Darstellung des Wasserflusses bei dem Tropfenabscheider gemäß dem vierten Ausführungsbeispiels. Im Gegensatz zu dem Tropfenabscheider gemäß dem dritten Ausführungsbeispiels stellt der Wasserverlauf eine Ebene dar. Das Wasser fließt insbesondere nach vorne und in der Mitte raus. Wie in Fig. 6E zu sehen, ist der Wasserablauf im Wesentlichen in einer Ebene 200a vorgesehen, wobei ein Abschnitt 200b aus der Ebene herausragt, wobei dieser Abschnitt 200b es ermöglicht, dass das Wasser nach vorne abfließen kann.

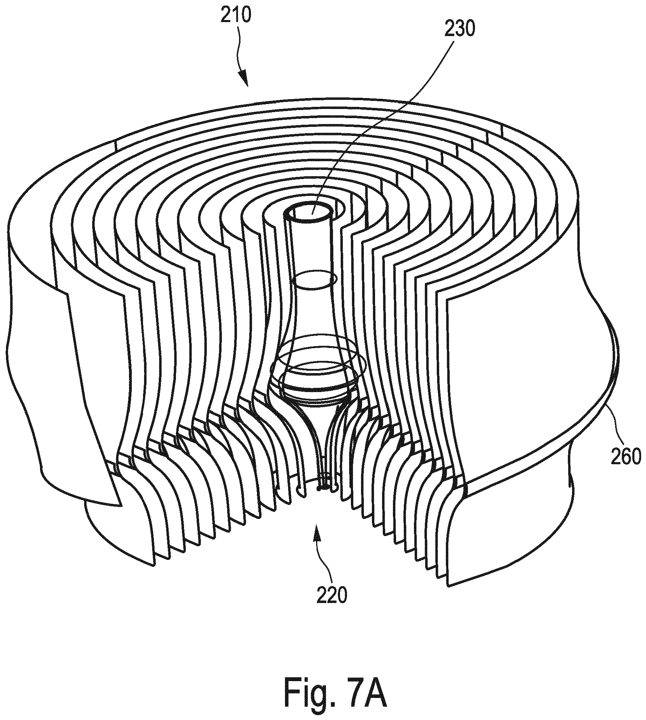

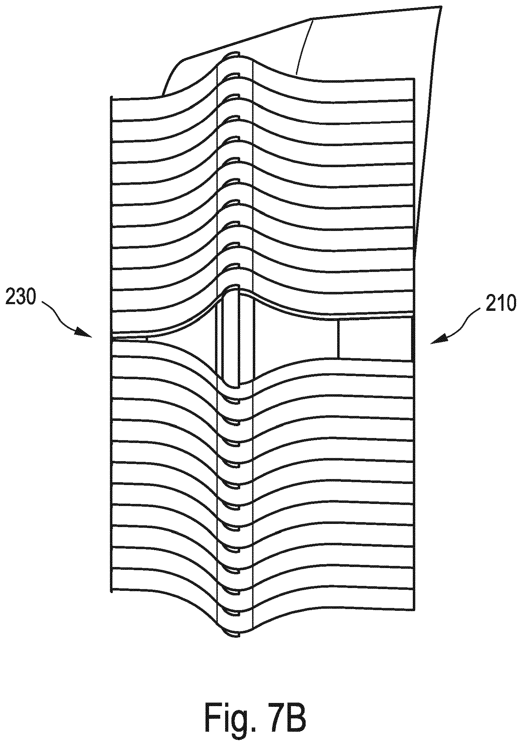

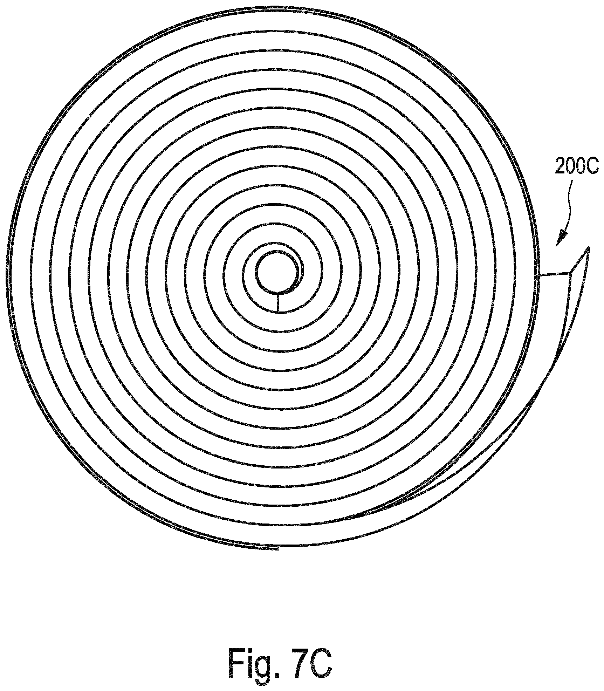

Fig. 7A bis 7C zeigen jeweils eine schematische Darstellung eines Tropfenabscheiders gemäß einem fünften Ausführungsbeispiels. Bei dem Tropfenabscheider gemäß dem fünften Ausführungsbeispiel ist ein Tropfenabscheider vorgesehen, welcher keine kegelförmige Grundfläche aufweist, d.h. das vordere und hintere Ende 210, 220 ist jeweils gerade ausgestaltet. Der Tropfenabscheider kann ebenfalls eine Rinne 260 aufweisen.

Gemäß einem Aspekt der vorliegenden Erfindung kann das Wasser nach außen und vorne über den Ablauf 230 ablaufen. Gemäß dem vierten Ausführungsbeispiel kann der mittlere Abschnitt nach hinten verjüngt sein.

Gemäß dem fünften Ausführungsbeispiel fließt das Wasser nicht in der Mitte, sondern im äußeren Abschnitt 200c ab.

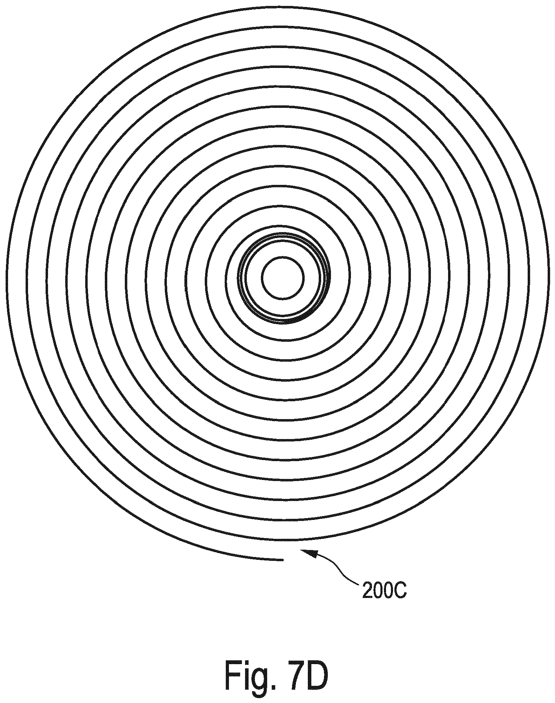

In Fig. 7D ist der Wasserablauf gezeigt. Insbesondere fließt das Wasser an dem Abschnitt 200c, d.h. am äußeren Bereich ab. Damit fließt das Wasser zur Seite weg und ab.

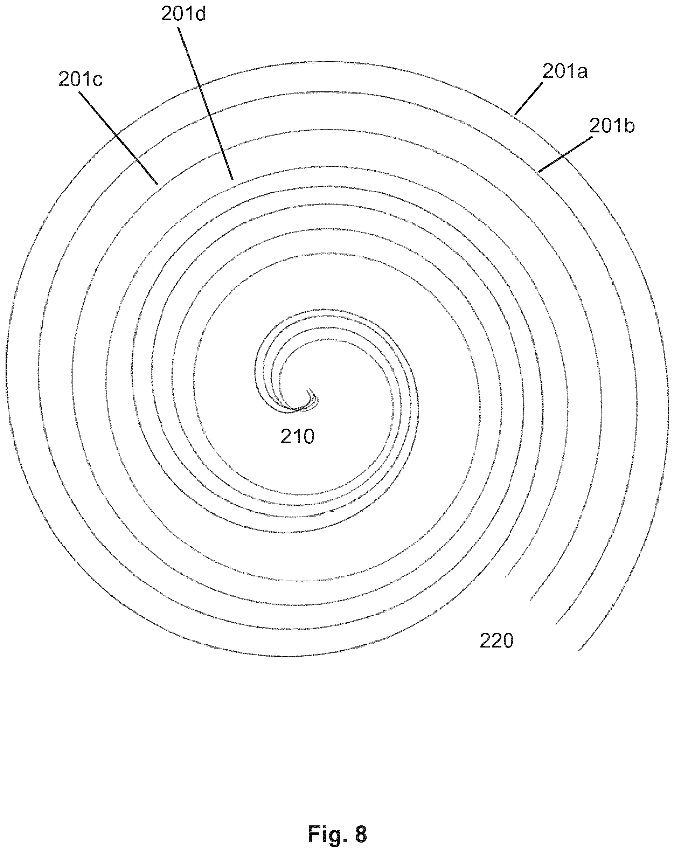

Fig. 8 zeigt eine schematische Darstellung eines Wasserlaufes bei einem Tropfenabscheider gemäß einem sechsten Ausführungsbeispiel. Der Tropfenabscheider gemäß dem sechsten Ausführungsbeispiel kann auf einem Tropfenabscheider gemäß dem ersten, zweiten, dritten, vierten oder fünften Ausführungsbeispiel basieren. Insbesondere weist der Tropfenabscheider eine Mehrzahl von Lamellen 201a, 201b, 201c, 201d auf, welche parallel zueinander angeordnet sein können. Diese Lamellen können als Profile ausgestaltet sein, welche parallel zueinander verlaufen. Damit können die abgeschiedenen Tröpfchen parallel ablaufen, so dass sich der Strom der abgeschiedenen Tröpfchen nicht zu einer großen Flüssigkeitsmenge bis zum Ende der Spirale summiert.

## Patentansprüche

1. Windenergieanlage (100), mit
einem Rotor (106), der drei Rotorblätter (108) und einen Rotorkopf (110) aufweist, und
einem Tropfenabscheider (200) im Bereich des Rotorkopfes (110), so dass Außenluft (AL) ins Innere des Rotorkopfes (110) eindringen kann,
wobei der Tropfenabscheider (200) ein erstes Ende (210) und ein zweites Ende (220) aufweist,
wobei das erste Ende (210) des Tropfenabscheiders (200) als Öffnung (111) des Rotorkopfes (110) ausgestaltet ist,
wobei der Tropfenabscheider (200) mindestens eine spiralförmig ausgestaltete Lamelle (201) aufweist.

2. Windenergieanlage nach Anspruch 1, wobei
die Spirale des Tropfenabscheiders kegelförmig ausgestaltet ist.

3. Windenergieanlage nach Anspruch 1, wobei
der Tropfenabscheider (200) eine Spiralspitze am ersten oder zweiten Ende (210, 220) aufweist.

4. Windenergieanlage nach Anspruch 1, 2 oder 3, wobei
der Tropfenabscheider (200) einen inneren Bereich (230) an dem ersten Ende (210) aufweist, welcher eine größere Steigung als der Rest der spiralförmigen Lamelle (201) aufweist, um abgeschiedene Flüssigkeit an die Spiralspitze am ersten Ende (210) zu transportieren.

5. Windenergieanlage nach einem der Ansprüche 1 bis 4, ferner mit einer Wand (250) im inneren Bereich (230) des zweiten Endes (220).

6. Verwendung eines Tropfenabscheiders (200) in einem Rotorkopf (110) einer Windenergieanlage (100) gemäß Anspruch 1, wobei
der Tropfenabscheider (200) eine spiralförmig ausgestaltete Lamelle aufweist,
wobei die Spirale eine gerade oder eine kegelförmige Grundlinie aufweist.

## Claims

1. A wind turbine (100) comprising
a rotor (106) having three rotor blades (108) and a rotor head (110), and
a mist eliminator (200) in the region of the rotor head (110) so that outside air (AL) can flow into the interior of the rotor head (110),
wherein the mist eliminator (200) has a first end (210) and a second end (220),
wherein the first end (210) of the mist eliminator (200) is in the form of an opening (111) of the rotor head (110),
wherein the mist eliminator (200) has at least one slat (201) of a spiral-shaped configuration.

2. A wind turbine according to claim 1 wherein
the spiral of the mist eliminator is of a conical configuration.

3. A wind turbine according to claim 1 wherein
the mist eliminator (200) has a spiral tip at the first or second end (210, 220).

4. A wind turbine according to claim 1, claim 2 or claim 3 wherein
the mist eliminator (200) has an inner region (230) at the first end (210), which is of a greater gradient than the rest of the spiral-shaped slats in order to transport separated liquid to the spiral tip at the first end (210).

5. A wind turbine according to one of claims 1 to 4 and further comprising a wall (250) in the inner region (230) of the second end (220).

6. Use of a mist eliminator (200) in a rotor head (110) of a wind turbine (100) according to claim 1, wherein
the mist eliminator (200) has a slat of a spiral-shaped configuration,
wherein the spiral has a straight or a conical base line.

## Revendications

1. Eolienne (100), comportant
un rotor (106), qui présente trois pales de rotor (108) et une tête de rotor (110),
et
un séparateur de gouttes (200) dans la zone de la tête de rotor (110), de sorte que de l'air extérieur (AL) peut pénétrer à l'intérieur de la tête de rotor (110),
dans laquelle le séparateur de gouttes (200) présente une première extrémité (210) et une deuxième extrémité (220),
dans laquelle la première extrémité (210) du séparateur de gouttes (200) est conçue en tant qu'ouverture (111) de la tête de rotor (110),
dans laquelle le séparateur de gouttes (200) présente au moins une lamelle (201) conçue en spirale.

2. Eolienne selon la revendication 1, dans laquelle
la spirale du séparateur de gouttes est conçue de façon conique.

3. Eolienne selon la revendication 1, dans laquelle
le séparateur de gouttes (200) présente une pointe spiralée au niveau de la première ou deuxième extrémité (210, 220).

4. Eolienne selon la revendication 1, 2 ou 3, dans laquelle
le séparateur de gouttes (200) présente une zone intérieure (230) au niveau de la première extrémité (210), laquelle présente une inclinaison plus importante que le reste de la lamelle (201) en spirale, afin de transporter le liquide séparé sur la pointe spiralée au niveau de la première extrémité (210).

5. Eolienne selon l'une quelconque des revendications 1 à 4, en outre avec
une paroi (250) dans la zone intérieure (230) de la deuxième extrémité (220).

6. Utilisation d'un séparateur de gouttes (200) dans une tête de rotor (110) d'une éolienne (100) selon la revendication 1, dans laquelle le séparateur de gouttes (200) présente une lamelle conçue en spirale,
dans laquelle la spirale présente une ligne de base droite ou une conique.
